# EUROPÄISCHE PATENTSCHRIFT

(11) **EP 0 738 241 B1**
(45) Veröffentlichungstag und Bekanntmachung des Hinweises auf die Patenterteilung: **26.08.1998**
(21) Anmeldenummer: 94912438.2
(22) Anmeldetag: 30.03.1994
(51) Int. Cl.: C03B 33/095

(54) **VERFAHREN ZUM SCHNEIDEN VON HOHLGLAS**
PROCESS FOR CUTTING HOLLOW GLASSWARE
PROCEDE PERMETTANT DE DECOUPER DU VERRE CREUX

(30) Priorität: 02.04.1993 DE 4310653; 21.07.1993 DE 4324375
(43) Veröffentlichungstag der Anmeldung: 23.10.1996
(73) Patentinhaber: FRAUNHOFER-GESELLSCHAFT ZUR FÖRDERUNG DER ANGEWANDTEN FORSCHUNG E.V., 80636 München (DE)
(72) Erfinder: DÖLL, Walter, D-79276 Reute (DE); BEINERT, Joachim, D-79104 Freiburg (DE); ROTH, Marcus, D-96317 Kronach (DE); SCHINKER, Martin, G., D-79249 Merzhausen (DE); KOLLOFF, Rainer, D-79206 Breisach (DE); SPIESS, Gerd, D-79110 Freiburg (DE); STAHN, Dieter, D-79252 Stegen (DE)
(86) Internationale Anmeldenummer: DE9400367
(87) Internationale Veröffentlichungsnummer: WO9422778

(56) Entgegenhaltungen:
- DE-A- 2 512 612
- FR-A- 1 136 999
- US-A- 4 146 380

## Beschreibung

Die Erfindung betrifft ein Verfahren zum Schneiden von Hohlglas, bei dem mit einem Laserstrahl um eine vorgesehene Trennlinie auf einer Außenfläche entlang einer Umfangslinie des Hohlglases eingestrahlt wird.

Ein derartiges Verfahren ist aus der DE-OS 35 46 001 bekannt und besteht daraus, daß der zu zerschneidende Bereich des Glases auf einer hohen Temperatur geringfügig unterhalb der Erweichungstemperatur gehalten wird und daß das Glas anschließend bei einer gleichzeitig wirkenden Zugkraft auf das abzuschneidende Glasteil mehrfach längs der geplanten Trennlinie mit einem Laserstrahl bestrahlt wird. Bei diesem Verfahren übersteigt die lokale Temperatur im Auftreffbereich des Laserstrahles die Erweichungstemperatur, so daß durch die Zugkraft nach einem Aufweichen entlang der Trennlinie nach einer gewissen Zeit das abzutrennende Glasteil abgetrennt wird.

Dieses Verfahren weist durch die lokale Erwärmung über die Erweichungstemperatur jedoch den Nachteil auf, daß sich abdampfendes Glas an den benachbarten, kalten Glas-wänden niederschlägt. Aus diesem Grund wird auf dem zu schneidenden Bereich während des Schneidvorganges ein zusätzlicher Inertgasstrom gerichtet, um die Dämpfe zu verblasen. Die Entsorgung der häufig schwermetallhaltigen Dämpfe erfordert jedoch einen hohen Aufwand. Im zähplastischen Zustand ist zudem keine ausreichend ebene Trennfläche erreichbar, so daß dieses Verfahren sich in der fertigungstechnischen Anwendung nicht durchgesetzt hat.

In der Druckschrift JP-OS 57-20 98 38 ist ein Verfahren beschrieben, bei dem der Glaskörper entlang einer Trennlinie mit einem Laserstrahl durch Abdampfen von Glasmaterial getrennt wird. Da bei diesem Verfahren eine erhebliche Menge Glas abdampft, ist ein hoher technischer Aufwand vonnöten, um mit einem Inertgasstrom ein Beschlagen der Glasoberfläche zu vermeiden. Da die gesamte Glasdicke durch den Laserstrahl angeschmolzen bzw. verdampft werden muß, ist die Verweildauer eines Glaskörpers an der Arbeitsstation entsprechend lang. Dies führt zu einer erheblichen Verlangsamung des Arbeitstaktes. Aus diesen Gründen ist ein solches Verfahren für ein rationelles Durchführen von Schneidvorgängen an Hohlgläsern nicht praktikabel.

Bei allen vorgenannten Verfahren müssen Fehlstellen wie Schrennrisse, Sprödbrüche, abgeplatzte Glasteilchen sowie unebene Trennflächen durch Schleifen aufwendig nachbearbeitet werden. Dies führt zu einem erheblichen Entsorgungsaufwand für die oft schwermetallhaltigen Schleifschlämme.

In der Praxis verbreitet sind Verfahren, bei denen mit einer harten Spitze eine um den vollen Umfang des Hohlglases umlaufende Anrißlinie aufgebracht wird und anschließend mit Gasflammen der Bereich um die mechanische Rißlinie einem thermischen Schock zum Trennen des Hohlglases unterzogen wird. Bei diesem Verfahren tritt häufig der Fall auf, daß der Trennriß nicht mit der Anrißlinie zusammenfällt sowie nicht den gewünschten, ebenen Verlauf nimmt, so daß aufwendig nachgeschliffen werden muß.

Aus der US-PS 5 132 505 ist das Trennen von Flachglas mittels eines Lasers bekannt. Auf dem zu trennenden Flachglas wird mit einem CO₂-Laser bei einer Wellenlänge von 10,6 Mikrometern und einer Leistung von 400 Watt durch wiederholtes Belichten einer über das Flachglas verlaufenden Spur eine Spannungszone aufgebaut. Bei einer ausreichend hohen thermischen Spannung in der Spur beginnt ausgehend von einer Rißstartstelle ein das Flachglas trennender Trennriß. Die Rißstartstelle ist vorteilhafterweise durch einen langen Startriß gebildet, so daß nunmehr verhältnismäßig geringe thermische Spannungen zum Ausbilden des Trennrisses ausreichend sind, wobei durch eine langsame Rißgeschwindigkeit von etwa 0,07 Metern pro Sekunde eine genaue Rißlinie gebildet ist.

Ein derartiges Verfahren schafft zwar bei Flachglas eine saubere Trennlinie, führt bei einer Anwendung auf Hohlglas jedoch zu einer häufig nicht exakten Trennlinie, da aufgrund der gegenüber Flachglas anderen Spannungsverhältnisse durch den langen Startriß sowie die geringe Ausbreitungsgeschwindigkeit des Trennrisses häufig unsaubere Trennlinien mit Stufen im Bereich der aufeinanderzulaufenden Rißspitzen des Trennrisses auftreten. Weiterhin ist die Trennrißausbildung mit niedriger Geschwindigkeit verhältnismäßig stark von inneren Spannungsverhältnissen in dem Glas abhängig, so daß bei einer industriellen Massenfertigung mit festen Taktzeiten produktionsstörende Unregelmäßigkeiten auftreten können.

Aus der US-PS 3 543 979 ist das Trennen von Flachglas mittels eines Laserstrahles bekannt, wobei nach dem Beleuchten einer Spur auf einer Breite von etwa einem Zentimeter mit einer Leistung zwischen 50 Watt und 500 Watt an einem Ende der Spur ein Startriß gesetzt wird und anschließend durch Beanspruchen mit Biegekräften über eine erhöhte Transportrolle das Flachglas durch den sich in der Spur ausbreitenden Trennriß getrennt wird. Bei diesem Verfahren ist zwar der Zeitpunkt der Ausbildung des Trennrisses genau festgelegt, allerdings ist das äußerst empfindliche Zusammenwirken der thermischen Spannungen und Biegekräfte zum Ausbilden eines sauberen Trennrisses schwierig zu kontrollieren.

Aus Patents Abstracts of Japan, C-344 vom 08.05.1986, Vol. 10/Nr. 123 ist gemäß der JP 60-25 11 38 (A) bekannt, zum Schneiden von Glas ohne Rißbildung das Glas zuerst mit einem defokussierten Laserstrahl zu erwärmen, anschließend mit einem fokussierten Laserstrahl zu schneiden und nach dem Schneiden mit einem defokussierten Laserstrahl zum Abbauen der thermischen Spannungen zu kühlen. Bei diesem Verfahren ist zwar durch das Vorerwärmen und das Nachkühlen mittels Bestrahlen mit einem defokussierten Laserstrahl das Einfrieren von thermischen Restspannungen in dem Glas vermieden, allerdings ergeben sich durch die sehr hohen Temperaturen beim Schneiden des Glases die oben erwähnten Probleme aufgrund von abdampfendem Glas.

Aus der DE-A- 2 521 612 ist ein Verfahren zum Schneiden von Glasrohren bekannt, bei dem das Glasrohr jedoch nicht gedreht wird, sondern das Laserlicht auf einer Umfangslinie des Rohres verteilt wird. Hierbei wird vorher ein Anriß entlang der Umfangslinie ein kurzes Stück oder aber auch 360° aufgebracht. Da das Rohr nicht gedreht werden soll, ist eine aufwendige Optik erforderlich, die das Laserlicht gleichmäßig über den Umfang verteilen muß.

Ausgehend von diesem Stand der Technik liegt der Erfindung die Aufgabe zugrunde, ein Verfahren der eingangs genannten Art zu schaffen, das das Schneiden von Hohlgläsern, insbesondere das Abtrennen von Blaskappen an Trinkgläsern, ohne Entwicklung von störenden Dämpfen bei einer hohen Maßgenauigkeit der Schnitthöhe sowie einer hohen Qualität der Trennfläche zuverlässig innerhalb der durch den Produktionsablauf vorgegebenen Taktzeit gestattet.

Diese Aufgabe wird erfindungsgemäß dadurch gelöst, daß auf einem Abschnitt auf der Trennlinie ein im Verhältnis zu dem Umfang des Hohlglases sehr kurzer Startriß gesetzt wird, daß durch ein Erwärmen mit wenigstens einem Laserstrahl entlang der gesamten Umfangslinie des Hohlglases wenigstens eine Spannungszone in das Glas eingebracht wird, wobei bei dem Schritt des Erwärmens die Umfangsgeschwindigkeit des Hohlglases im Bereich der Trennlinie wenigstens ein Meter pro Sekunde beträgt, und daß nach den Schritten des Setzens des Startrisses und des Einbringens der Spannungszone entlang der gesamten Umfangslinie des Hohlglases in dem Bereich der Spannungszone gekühlt wird.

Bei dem erfindungsgemäßen Verfahren ist es völlig ausreichend, daß zum Einbringen der Spannungszone durch den Laserstrahl über den gesamten Umfang des Hohlglases die Temperatur im Bereich der Spannungszone deutlich unterhalb der Erweichungs- und somit erst recht unter der Verdampfungstemperatur liegt. Dadurch wird einerseits das störende Abdampfen von Glasmaterial vermieden und andererseits führt die kontrolliert eingebrachte thermische Spannung nicht zu einem unerwünschten Ausbilden von Schrennrissen und/oder von entlang einer ebenen Trennlinie ausbrechenden Sprödbrüchen. Der in dem Bereich der kleinräumigen Spannungszone auf einem sehr kurzen Abschnitt des Umfanges auf der vorgesehenen Trennlinie gesetzte Startriß vor oder nach dem Einbringen der Spannungszone durch Erwärmen sowie das sich an das Erwärmen und das Setzen des Startrisses anschließende Kühlen führt zu derart hohen Zugspannungen, daß von dem Startriß ausgehend der Trennriß mit hoher Geschwindigkeit startet und das Glas in wenigen Millisekunden über seinen Umfang durchtrennt ist.

Durch das Kühlen tritt eine Spannungsumkehr im Bereich der Spannungszone auf. Die nach dem Aufbauen der Spannungszone auf der Außenseite des Hohlglases vorliegende Druckspannung konvertiert durch das Kühlen in eine Zugspannung, so daß es aufgrund des lokal hohen Spannungsgradienten zu einer sehr schnellen Rißausbreitung in einer Ebene kommt, wobei die beidseitig des Startrisses aufeinanderzulaufenden Rißspitzen im wesentlichen unbeeinflußt voneinander in einem Punkt zusammenlaufen, so daß eine äußerst plane Trennfläche erreicht ist.

Die gleichmäßige Kühlung der Spannungszone längs ihres gesamten Umfanges bewirkt entlang des Rißlaufweges konstante Spannungsbedingungen und damit eine gleichmäßig hohe Trennflächenqualität unter Vermeidung von Ausbrüchen, Rißverzweigungen oder Stufen. Durch die gegenüber der Erweichungstemperatur des Glases geringe Temperatur in der Spannungszone und das Setzen des sehr kurzen Startrisses sowie das anschließende Kühlen erfolgt die Trennung zeitlich festgelegt in einer sehr kurzen Zeit, so daß eine definierte Taktfrequenz bei einer Massenbearbeitung erzielt wird.

Zur Erzielung einer hohen Taktfrequenz kann der in der Technik übliche Weg der Erhöhung der Laserleistung zur erhöhten Energieeinkopplung für qualitativ hochwertige Trennflächen nicht beschritten werden, da dies nachteiligerweise die Gefahr der Schrennrißbildung erhöht. Aus diesem Grunde wird in einem Ausführungsbeispiel die Drehfrequenz des sich drehenden Hohlglases bei dem Belichten mit dem Laserstrahl in Bezug auf die Drehfrequenz an den übrigen Arbeitsstationen erhöht und der Laserstrahl beispielsweise mit einer Zylinderlinse oder mit einem auf eine Linie fokussierenden Spiegel gebündelt entlang der Trennlinie ausgerichtet. Die Umfangsgeschwindigkeit des Hohlglases im Bereich der Auftreffstelle des Laserstrahles beträgt wenigstens ein Meter pro Sekunde, vorzugsweise etwa vier Meter pro Sekunde. Durch diese beiden Maßnahmen werden bei verhältnismäßig hohen Laserleistungen die bruchauslösenden Spannungen ohne eine Ausbildung von Schrennrissen zu einem frühen Zeitpunkt erreicht, so daß die Taktfrequenz für eine rationale Fertigung relativ hoch ist.

In einer Ausgestaltung der Erfindung wird an einer Arbeitsstation vor dem Erwärmen mechanisch mit einer im wesentlichen mittig zu dem Querschnitt des Laserstrahls an der Glasoberfläche positionierten Anrißspitze der Startriß auf einer Länge von weniger als 1 Millimeter, vorzugsweise mit etwa 0,1 Millimeter, gesetzt. Durch den sehr kurzen Startriß sind optische Störstellen an der Rißstartstelle auf der Trennfläche vermieden. Anschließend wird mit einem fokussierten Laserstrahl im mittleren infraroten Spektralbereich durch die Absorption der Laserenergie an der äußeren Glasoberfläche nahe, jedoch außerhalb des Fokalbereiches zunächst eine Druckspannungszone mit einer Breite von wenigen Millimetern gebildet. Während des Erwärmens rotiert das Hohlglas mit einer gegenüber den übrigen Bearbeitungs-schritten erhöhten Drehfrequenz. Daraufhin wird zur Erhöhung der Thermoschockwirkung und damit der bruchauslösenden Spannungen durch die Druck-Zug-Konversion im gesamten Bereich der Spannungszone gekühlt. Der Trennriß startet genau in der durch den Startriß vorgegebenen Ebene. Mit der Kühlung wird der zeitlich definierte Rißstart und damit die zuverlässige Einhaltung der Taktzeit sichergestellt.

Zur Verkürzung der Bearbeitungszeit ist es vorteilhaft, vor dem Bilden der Spannungszone mit dem Laserstrahl mit Heißluftdüsen im Bereich um die beabsichtigte Trennlinie ein verhältnismäßig breites Vorerwärmungsband zu bilden.

Dadurch kann die Temperatur der Spannungszone etwas höher als ohne Vorerwärmen gewählt werden, ohne daß es zu einer Ausbildung von Rissen oder Brüchen kommt. Zudem wird die Endtemperatur in der Spannungszone mit einer kürzeren Lasereinwirkungszeit erreicht. Diese erhöhte Temperatur der Spannungszone führt zu einem erhöhten Spannungsfeld und somit zu einer zuverlässigen Ausbreitung des Trennrisses.

In einer weiteren Ausgestaltung des erfindungsgemäßen Verfahrens wird die Spannungszone ohne ein Vorerwärmen durch Heißluft mit zwei Laserstrahlen mit jeweils im Auftreffbereich kleinen Durchmessern im wesentlichen oberhalb und unterhalb symmetrisch zu der beabsichtigten Lage des späteren Trennrisses erwärmt. Nach der Erwärmung wird nunmehr im wesentlichen mittig zwischen den beiden Auftreffpunkten des oberen beziehungsweise unteren Laserstrahles durch sehr kurzzeitiges Fokussieren der beiden Laserstrahlen in die Spannungszone kontrolliert ein kleiner Schrennriß gesetzt. Dieser Schrennriß wirkt als Startriß, der sich nach dem Kühlen zu einem schnell umlaufenden Trennriß hoher Planarität fortsetzt. Auch in diesem Ausführungsbeispiel wird das Ausbilden des Trennrisses durch das Kühlen zeitlich genau festgelegt.

Bei dem erfindungsgemäßen Verfahren entfällt durch die hohe Güte des Trennrisses das Nachschleifen. Üblicherweise wird nach dem Durchlaufen von wenigstens einer Temperierungsstation mit Flammköpfen die scharfkantige Trennfläche gerundet und nach einem Nachtempern ist der Verarbeitungsprozeß abgeschlossen.

Weitere Ausgestaltungen und Vorteile der Erfindung ergeben sich aus den Unteransprüchen und der nachfolgenden Figurenbeschreibung. Es zeigen:
- Fig. 1: in einer schematischen Draufsicht einen Rundläufer mit einer Arbeitsstation zum Durchführen des erfindungsgemäßen Verfahrens,
- Fig. 2: eine Arbeitsstation zum Schneiden von Hohlgläsern in einer schematischen Draufsicht, bei der das Schneiden mit einem einzelnen Laserstrahl und einer Anrißspitze erfolgt,
- Fig. 3: eine Arbeitsstation in einer schematischen Seitenansicht, bei der das Schneiden mit zwei Laserstrahlen und einer Anrißspitze erfolgt sowie
- Fig. 4 und 5: schematisch das Einbringen der Spannungszone durch Bestrahlen der Glasoberfläche mit zwei fokussierten Laserstrahlen im vorfokalen Bereich und das thermische Setzen des Startrisses durch das Verlegen der Brennpunkte der beiden fokussierten Laserstrahlen auf die Glasoberfläche in den Bereich der Spannungszone.

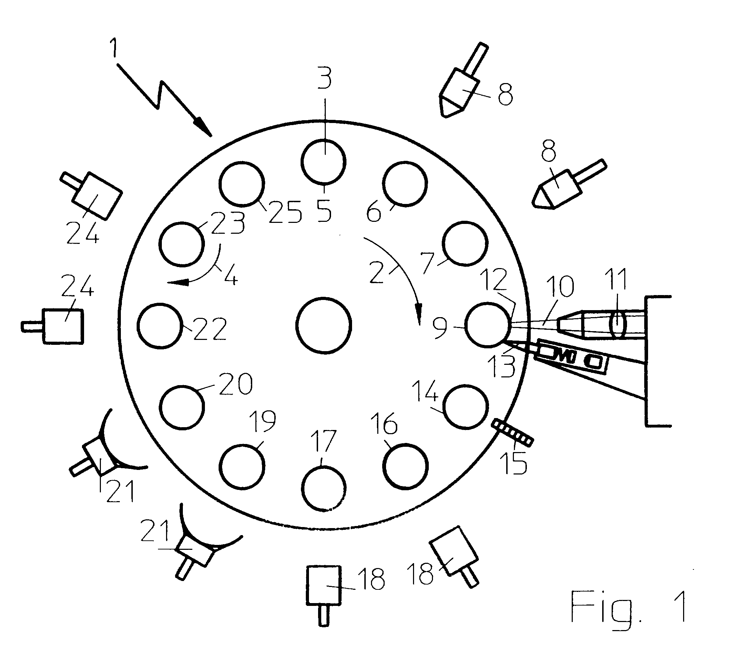

Fig. 1 zeigt einen Rundläufer 1, der sich im durch den Pfeil 2 dargestellten Uhrzeigersinn dreht und an dem zwölf, jeweils durch ihren größten Umfang schematisch dargestellte Hohlgläser 3 angebracht sind. Die sich in Bearbeitung befindlichen Hohlgläser 3 drehen sich ebenfalls im durch den Pfeil 4 angezeigten Uhrzeigersinn. An der Beladeposition 5 wird eine Arbeitsstation mit dem eine Blaskappe aufweisenden Hohlglas 3 beschickt. An den Vorerwärmungspositionen 6 und 7 werden die sich betriebsüblich mit etwa 2 Hertz drehenden Hohlgläser 3 in einem etwa 1,5 Zentimeter breitem Streifen symmetrisch zu dem beabsichtigten Trennriß mit heißer Luft aus Heißluftdüsen 8 angeblasen. Dieses Vorerwärmen dient dem Erhöhen der Taktfrequenz um einen Faktor von etwa 1,3 gegenüber einem fehlendem Vorerwärmen, da im Bereich des späteren Trennrisses bereits eine höhere Temperatur herrscht, die nun nicht ausschließlich durch Absorption der Laserenergie erzeugt werden muß, und zugleich dem Erhöhen der Kräfte in der späteren Spannungszone.

An der Schneideposition 9 wird die Drehzahl der Arbeitsstation auf etwa 15 Hertz erhöht und das Hohlglas 3 mit einem einzelnen Laserstrahl 10 mit einer Leistung von etwa 200 Watt bestrahlt. Der Laserstrahl 10 stammt aus einem CO₂-Laser und hat eine Wellenlänge von 10,6 Mikrometern. Der Laserstrahl 10 wird durch eine sphärische Fokussierlinse 11 gebündelt und hat im Auftreffbereich 12 auf dem Hohlglas 3 einen 1/e²-Durchmesser der Intensität von etwa 1,5 Millimetern. Der Brennpunkt des Laserstrahls 10 liegt in Strahlrichtung hinter dem Auftreffbereich 12. Die Drehfrequenz des Hohlglases 3 wird soweit erhöht, daß die Umfangsgeschwindigkeit des Hohlglases 3 im Auftreffbereich 12 in diesem Ausführungsbeispiel etwa 1,2 Meter pro Sekunde beträgt. Die Leistungsdichte in dem Auftreffbereich 12 ist so gewählt, daß nach etwa 20 Umdrehungen des Hohlglases 3 eine umlaufende Spannungszone mit einer Temperatur von etwa 250 Grad Celsius in das Hohlglas 3 eingebracht ist.

Nach dem Einbringen der Spannungszone wird mit einer Anrißspitze 13 mechanisch ein im wesentlichen an der Spur der maximalen Intensität des Laserstrahles 10 und damit der höchsten Temperatur durch einen kurzzeitigen Kontakt mit der Oberfläche des Hohlglases 3 ein kurzer Startriß mit einer Länge von weniger als 1 Millimeter gesetzt.

An der Kühlposition 14 wird mit einem flüssigkeitsgetränkten Vlies 15 die Spannungszone gekühlt, wodurch der Thermoschock und damit die Spannungen so erhöht werden, daß sich der Startriß zu einem umfänglichen Trennriß ausbildet und so die Blaskappe abgetrennt wird. Der sich ausbildende Trennriß beginnt an der Stelle des Startrisses und verläuft sehr genau in einer Ebene in der durch den Laserstrahl 10 gebildeten Spannungszone.

In abgewandelten Ausführungsbeispielen wird die Kühlung mit kalter Luft oder mit einem Luft-Wasser-Gemisch durch Aufblasen aus einer Düse herbeigeführt, die in dem Bereich der Spannungszone auf die Oberfläche des Hohlglases 3 gerichtet ist.

Somit ist durch das Erwärmen auf eine niedrige, im Hinblick auf eine unerwünschte Riß- oder Bruchbildung völlig unproblematische Temperatur und die durch den Laserstrahl 10 und den Startriß sehr präzise vorgegebene Ebene des Trennrisses eine Trennfläche hoher Planarität und Oberflächengüte erreicht.

An den Temperierpositionen 16 und 17 wird mit Temperierköpfen 18 das Hohlglas 23 wieder erwärmt, um die Verrundung vorzubereiten. An den Verrundungspositionen 19 und 20 werden mit Gasflammen aus Brennern 21 die scharfkantigen Glasränder an der Trennfläche verrundet. Durch die hohe Güte der Trennfläche ist ein Nachschleifen nicht erforderlich. An den Temperierpositionen 22 und 23 werden mit Temperierköpfen 24 die Spannungen nach dem Verrunden abgebaut. An der Entladeposition 25 wird das fertige Hohlglas 3 entnommen und braucht nicht einer aufwendigen Reinigung unterzogen werden, da weder durch die niedrigen Temperaturen bei dem Schneidevorgang Glasdampf entstanden und noch durch die Güte der Trennfläche Schleifstaub angefallen ist.

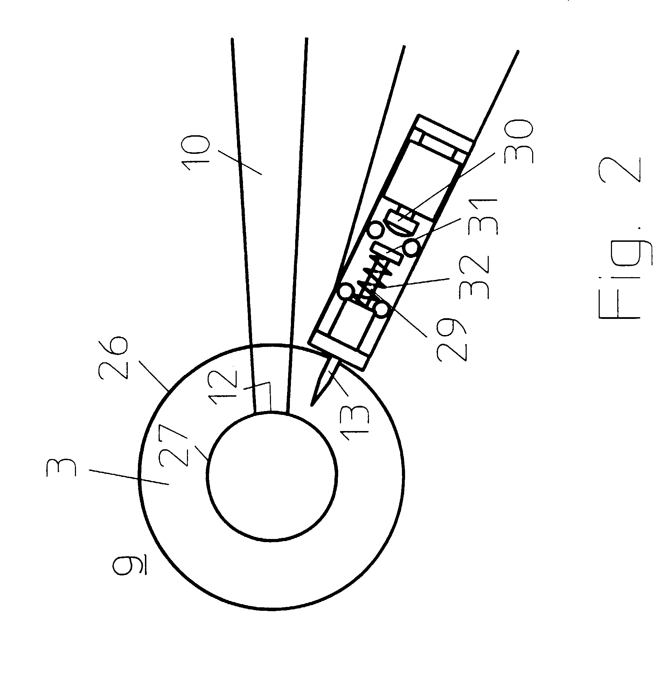

Fig. 2 zeigt schematisch vergrößert in einem gegenüber der Fig. 1 vergrößerten Maßstab die Schneideposition 9 mit einem Hohlglas 3 zum mechanischen Setzen eines Startrisses bei Verwendung eines einzigen fokussierten Laserstrahles 10. Der Fußrand 26 des Hohlglases 3 ist durch den großen Kreis dargestellt. Der Halsrand 27, entlang dem der spätere Trennriß umlaufen soll, ist durch den inneren Kreis dargestellt. Der fokussierte Laserstrahl 10 trifft vor dem Brennpunkt im vorfokalen Bereich auf die Glasoberfläche an dem Halsrand 27. In dem Auftreffbereich 12 wird durch die Absorption der Laserenergie eine thermisch erzeugte Spannungszone entlang des Umfanges eingebracht. In der Fig. 2 weist der Laserstrahl 10 an den gezeichneten Begrenzungen eine deutlich geringere als die 1/e²-Intensität auf um zu verdeutlichen, daß der Brennpunkt des Laserstrahles 10 nicht auf der Oberfläche des Glasrandes 27 liegt.

Zum Erzeugen des sehr kurzen Startrisses wird die an einem Stift 29 angebrachte Anrißspitze 13 durch das Auftreffen eines Schlagstempels 30 auf einen an dem Stift 29 angebrachten Amboß 31 kurzzeitig im Bereich der Spannungszone mit der Glasoberfläche in Kontakt gebracht. Eine Rückholfeder 32 zieht die Anrißspitze 13 sofort nach dem Setzen des Startrisses wieder in die Ausgangslage zurück.

Der Startriß kann auch gesetzt werden, indem bei einer Anordnung des Laserstrahles 10 gemäß der Fig. 2 der Startriß durch eine pulsartige Erhöhung der Laserleistung während der Erwärmung gesetzt wird. Hier ist eine Kühlung sehr zweckmäßig, da der durch den Laserpuls gesetzte Startriß oftmals nicht die Kerbschärfe hat, um ein zuverlässiges Ausbreiten des Startrisses auszulösen.

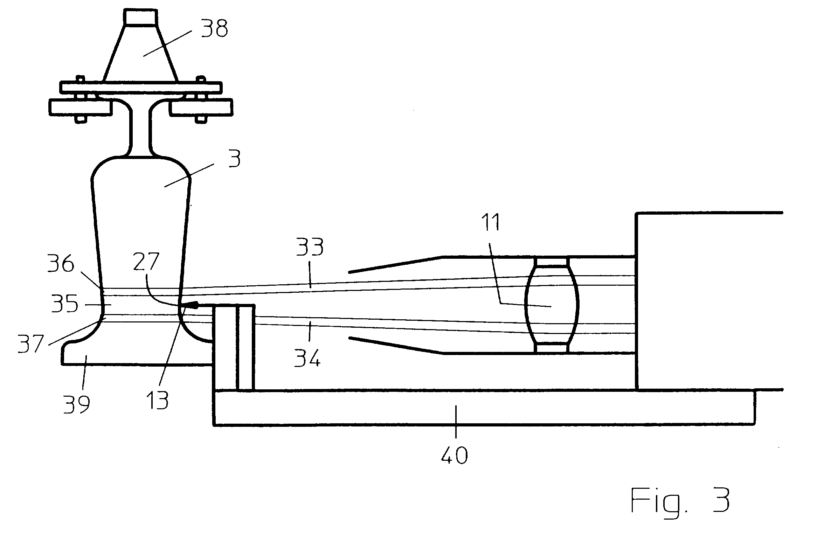

In Fig. 3 ist schematisch gezeigt, wie mit zwei fokussierten Laserstrahlen 33, 34 und einer Anrißspitze 13 mechanisch ein Startriß in dem Zwischenbereich 35 zwischen einer oberen Spannungszone 36 und einer unteren Spannungszone 37 gebildet wird. In einem Glashalter 38 ist ein Hohlglas 3 in Form eines Trinkglases hängend befestigt. An dem unteren Ende des Hohlglases 3 befindet sich die abzutrennende Glaskappe 39. Durch die Absorption des oberen Laserstrahles 33 und des unteren Laserstrahles 34, die aus dem Laserresonator kommend durch die Fokussierlinse 11 durchtreten und im vorfokalen Bereich auf den Halsrand 27 des Hohlglases 3 treffen, werden die obere Spannungszone 36 und die untere Spannungszone 37 auf dem sich drehenden Hohlglas 3 in das Glas eingebracht.

Die Anrißspitze 13 wird im wesentlichen mittig zwischen den Spannungszonen 36, 37 in dem Zwischenbereich 35 mit dem Hohlglas 3 in Kontakt gebracht, um den Startriß zu setzen. Die Anrißspitze 13 ist über einen Arm 40 mit dem Gehäuse des Lasers fest verbunden, so daß die Relativposition der Anrißspitze 13 zu den Laserstrahlen 33, 34 genau festliegt. In diesem Ausführungsbeispiel verläuft ausgehend von dem Startriß der Trennriß im wesentlichen in dem mittig zwischen der oberen Spannungszone 36 und der unteren Spannungszone 37 gelegenen Temperaturminimum. Auch bei diesem Verfahren ist die Planarität der Trennfläche sehr hoch und das Ausbilden von Sekundärrissen oder Sekundärbrüchen ist aufgrund der niedrigen Temperatur in dem Zwischenbereich 35 ausgeschlossen.

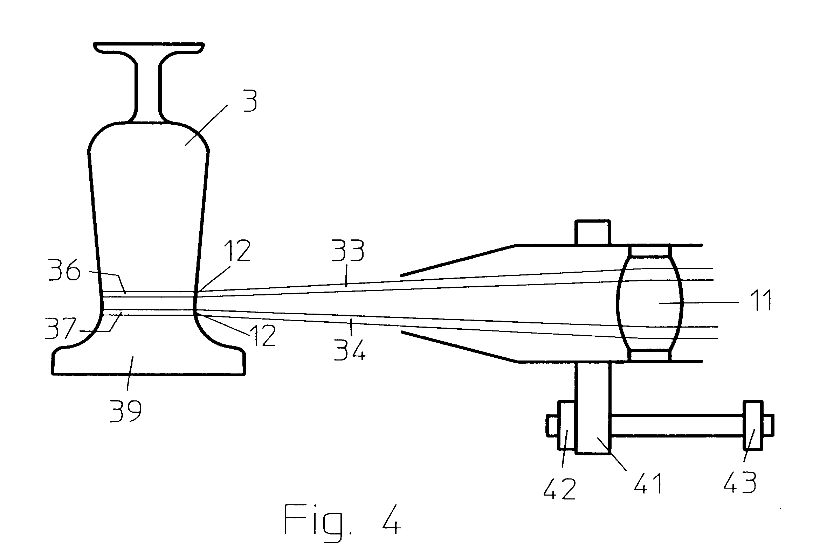

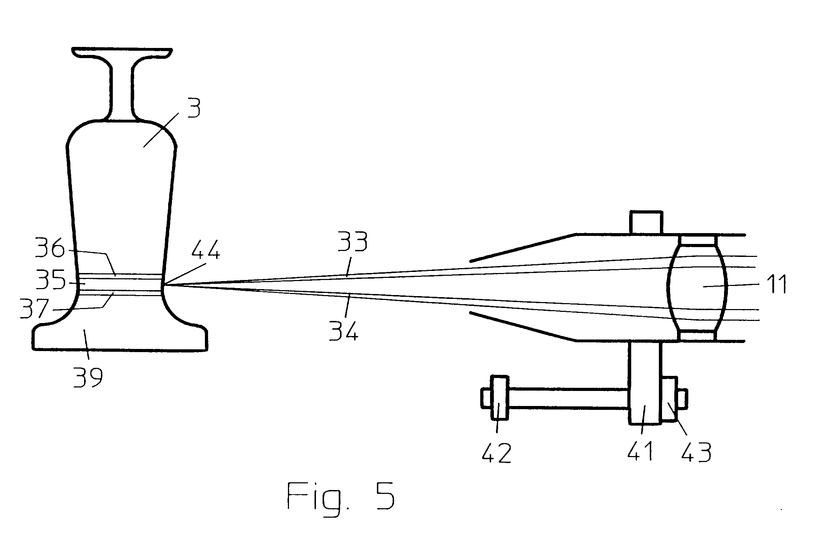

In Fig. 4 und 5 ist dargestellt, wie mit zwei Laserstrahlen 33, 34 das Einbringen der Spannungszone und ein optisch induziertes Setzen des Startrisses zum Abtrennen einer Blaskappe 39 von dem Hohlglas 3 erfolgt. Die mit einem Halter 41 fest verbundene Fokussierlinse 11 kann zwischen einem vorderen Anschlag 42 und einem hinteren Anschlag 43 verschoben werden. Wie in der Fig. 4 gezeigt werden mit dem oberen Laserstrahl 33 und dem unteren Laserstrahl 34, die durch die Fokussierlinse 11 durchgetreten sind, eine obere Spannungszone 36 und eine untere Spannungszone 37 in das Glas eingebracht, wobei der Halter 41 am vorderen Anschlag 42 anliegt. Wie bereits in der Fig. 3 dargestellt liegt auch hier der jeweilige Auftreffbereich 12 der Laserstrahlen 33, 34 auf dem Hohlglas 3 im vorfokalen Bereich.

In Fig. 5 ist gezeigt, wie mit dem Einbringen der Spannungszonen 36, 37 durch nach einem kurzzeitigen Zurückziehen des Halters 41 von dem vorderen Anschlag 42 an den hinteren Anschlag 43 in dem Zwischenbereich 35 die Brennpunkte der Laserstrahlen 33, 34 im wesentlichen mittig zwischen der oberen Spannungszone 36 und der unteren Spannungszone 37 in dem Zwischenbereich 35 auf einem Fokalbereich 44 zur Deckung gebracht werden. Bei beispielsweise besonders dickwandigen Hohlgläsern 3 ist vorgesehen, daß zeitgleich mit dem Fokussieren ein Laserpuls hoher Energie den Fokalbereich 44 beaufschlagt.

Auf diese Weise wird in dem gegenüber den jeweiligen Auftreffbereichen 12 der Laserstrahlen 33, 34 genau festgelegten Fokalbereich 44 aufgrund der kontrolliert thermisch erzeugten Spannungen ein sehr kleiner Startriß gesetzt. Sofort nach dem Setzen des Startrisses wird der Halter 41 wieder an den vorderen Anschlag 42 gefahren.

In einer zu dem letzten Ausführungsbeispiel abgewandelten Ausführungsform werden anstelle von zwei Laserstrahlen 33, 34 vier Laserstrahlen verwendet, von denen jeweils zwei oberhalb und unterhalb der beabsichtigten Trennlinie in jeweils gleicher Höhe auf die Oberfläche des Hohlglases 3 auftreffen. Auf diese Weise wird die zum Aufbau der Spannungszonen 36, 37 notwendige Zeitdauer verkürzt und die Leistungsdichte in dem Fokalbereich 44 bei gleichbleibender Leistung pro Laserstrahl erhöht, so daß auf einen Laserpuls hoher Energie verzichtet werden kann.

In einem weiteren Ausführungsbeispiel zur Bearbeitung eines als ein Trinkglas mit einer Blaskappe ausgebildeten Hohlglases 3 mit beispielsweise einem Durchmesser von 66 Millimetern im Auftreffbereich eines Laserstrahles und einer Wandstärke von 1,1 Millimetern, wobei die Außenfläche des Trinkglases gegen die Rotationsachse geneigt ist, rotiert das Trinkglas mit einer Drehfrequenz von etwa 2 Hertz. Auf der vorgesehenen Trennlinie wird zuerst mechanisch impulsartig, beispielsweise mit einer oben beschriebenen Anrißspitze 13, ein Startriß von etwa 0,1 Millimeter Länge gesetzt. Anschließend wird die Drehfrequenz auf etwa 20 Hertz erhöht, so daß sich im Auftreffbereich des Laserstrahles auf das Trinkglas eine Umfangsgeschwindigkeit von etwa 4 Metern pro Sekunde ergibt.

Der durch eine Zylinderlinse durchtretende Laserstrahl eines CO₂-Lasers wird nach Setzen des Startrisses auf die äußere Glasoberfläche gerichtet. Die Längsachse der Zylinderlinse ist parallel zu der vorgesehenen Trennlinie ausgerichtet und mit einem Abstand von der äußeren Oberfläche des Trinkglases angeordnet, für den sich eine Breite des Auftreffbereiches von etwa 2 Millimetern ergibt. Die Belichtungszeit beträgt etwa 1,7 Sekunden bei einer Laserleistung von 200 Watt. In einer Ausführungsvariante wird der Laserstrahl mit einem auf eine Linie fokussierenden Spiegel auf das Trinkglas gerichtet, wobei die Linie parallel zu der vorgesehenen Trennlinie ausgerichtet ist. Der Spiegel ist beispielsweise als ein sogenannter Linienintegrator mit einem elliptischen Spiegel sowie Facetten ausgeführt.

Danach wird entlang der eingebrachten Spannungszone über den gesamten Umfang des Trinkglases für eine Dauer von etwa 0,2 Sekunden mit einem aus einer Düse aufgeblasenen Sprühwassernebel gekühlt. Die sich nach Abfallen der Blaskappe ergebende Trennfläche ist von einer so hohen Qualität, daß ohne weitere Nachbearbeitungsschritte anschließend bei einer Drehfrequenz von etwa 2 Hertz die Trennfläche verrundet wird.

In einer zu dem letztgenannten Ausführungsbeispiel abgewandelten Ausführungsform wird zuerst durch das Erwärmen mit einem mittels einer mit ihrer Längsachse parallel zu der beabsichtigten Trennlinie ausgerichteten Zylinderlinse gebündelten Laserstrahl die Spannungszone eingebracht. Vor dem sich anschließenden Setzen des Startrisses durch eine sehr kurzzeitige Erhöhung der Laserleistung oder ein Verfahren der Zylinderlinse zum Fokussieren auf die vorgesehene Trennlinie wird eine mit ihrer Längserstreckung rechtwinklig zu der Längsachse der Zylinderlinse ausgerichtete Spaltblende mit einer Spaltbreite zwischen 1 Millimeter und 3 Millimetern in den Strahlengang des Laserstrahles eingefahren. Die Spaltblende begrenzt den entlang der beabsichtigten Trennlinie ausgedehnten Auftreffbereich, so daß der Startriß punktuell gesetzt wird. Auf diese Weise wird das Ausbilden einer in Umfangsrichtung ausgedehnten Schrennrißspur vermieden. Die Spaltblende wird nach Setzen des Startrisses wieder aus dem Strahlengang des Laserstrahles entfernt. Anstatt der Spaltblende kann auch eine Lochblende vorgesehen sein, die nach dem Einfahren zentrisch zu der Achse des Laserstrahles angeordnet ist.

## Patentansprüche

1. Verfahren zum Schneiden von Hohlglas (3), bei dem mit einem Laserstrahl (10) um eine vorgesehene Trennlinie auf einer Außenfläche entlang einer Umfangslinie des Hohlglases (3) eingestrahlt wird, **dadurch gekennzeichnet**, daß auf einem Abschnitt auf der Trennlinie ein im Verhältnis zu dem Umfang des Hohlglases (3) sehr kurzer Startriß gesetzt wird, daß durch ein Erwärmen mit wenigstens einem Laserstrahl (10, 33, 34) entlang der gesamten Umfangslinie des Hohlglases (3) wenigstens eine Spannungszone (35, 36, 37) in das Glas eingebracht wird, wobei bei dem Schritt des Erwärmens die Umfangsgeschwindigkeit des sich drehenden Hohlglases (3) im Bereich der Trennlinie wenigstens ein Meter pro Sekunde beträgt, und daß nach den Schritten des Setzens des Startrisses und des Einbringens der Spannungszone (35, 36, 37) entlang der gesamten Umfangslinie des Hohlglases (3) in dem Bereich der Spannungszone (35, 36, 37) gekühlt wird.

2. Verfahren nach Anspruch 1, dadurch gekennzeichnet, daß der Startriß vor dem Erwärmen gesetzt wird.

3. Verfahren nach Anspruch 1, dadurch gekennzeichnet, daß der Startriß nach dem Erwärmen gesetzt wird.

4. Verfahren nach einem der Ansprüche 1 bis 3, dadurch gekennzeichnet, daß die Umfangsgeschwindigkeit etwa vier Meter pro Sekunde beträgt.

5. Verfahren nach einem der Ansprüche 1 bis 4, dadurch gekennzeichnet, daß zum Aufbringen der Spannungszone (35) ein einzelner Laserstrahl (10) verwendet wird.

6. Verfahren nach einem der Ansprüche 1 bis 4, dadurch gekennzeichnet, daß zum Aufbringen von zwei Spannungszonen (36, 37) zwei Laserstrahlen (33, 34) verwendet werden, die jeweils oberhalb und unterhalb der beabsichtigten Trennlinie auf die Oberfläche des Hohlglases (3) auftreffen.

7. Verfahren nach einem der Ansprüche 1 bis 4, dadurch gekennzeichnet, daß zum Aufbringen von zwei Spannungszonen (36, 37) vier Laserstrahlen verwendet werden, von denen jeweils zwei in einer Höhe oberhalb und unterhalb der beabsichtigten Trennlinie auf die Oberfläche des Hohlglases (3) auftreffen.

8. Verfahren nach einem der Ansprüche 5 bis 7, dadurch gekennzeichnet, daß der wenigstens eine Laserstrahl (10, 33, 34) mit wenigstens einer Sammellinse konvergent auf das Hohlglas (3) gerichtet wird.

9. Verfahren nach Anspruch 8, dadurch gekennzeichnet, daß die Sammellinse eine Zylinderlinse ist, wobei die Längsachse der Zylinderlinse parallel zu der vorgesehenen Trennlinie ausgerichtet ist.

10. Verfahren nach einem der Ansprüche 5 bis 7, dadurch gekennzeichnet, daß der wenigstens eine Laserstrahl (10, 33, 34) mit wenigstens einem auf eine Linie fokussierenden Spiegel konvergent auf das Hohlglas (3) gerichtet wird, wobei die Linie parallel zu der Trennlinie ausgerichtet ist.

11. Verfahren nach einem der Ansprüche 1 bis 10, dadurch gekennzeichnet, daß der Startriß im Bereich der höchsten Spannung in der Spannungszone (35, 36, 37) gesetzt wird.

12. Verfahren nach einem der Ansprüche 1 bis 11, dadurch gekennzeichnet, daß der Startriß mechanisch mit einer harten Anrißspitze (13) gesetzt wird.

13. Verfahren nach Anspruch 12, dadurch gekennzeichnet, daß die Relativposition der Anrißspitze (13) zu dem Laserstrahl (10, 33, 34) festgelegt ist.

14. Verfahren nach einem der Ansprüche 1 bis 11, dadurch gekennzeichnet, daß der Startriß mit wenigstens einem Laserstrahl (10, 33, 34) in einem kleinen Bereich (44) mit hoher Laserleistungsdichte gesetzt wird.

15. Verfahren nach Anspruch 14, dadurch gekennzeichnet, daß die hohe Laserleistungsdichte durch Fokussieren wenigstens eines Laserstrahles (10, 33, 34) erzeugt wird.

16. Verfahren nach Anspruch 14 oder 15, dadurch gekennzeichnet, daß die hohe Laserleistungsdichte in dem kleinen Bereich (44) durch wenigstens einen Puls hoher Energie erzeugt wird.

17. Verfahren nach Anspruch 9 oder Anspruch 10 und einem der Ansprüche 15 oder 16, dadurch gekennzeichnet, daß vor dem Setzen des Startrisses eine Strahlabschattungsblende in den wenigstens einen Laserstrahl (10, 33, 34) eingeführt wird.

18. Verfahren nach einem der Ansprüche 1 bis 17, dadurch gekennzeichnet, daß durch Aufblasen von kalter Luft gekühlt wird.

19. Verfahren nach einem der Ansprüche 1 bis 17, dadurch gekennzeichnet, daß durch Aufblasen eines Luft-Wasser-Gemisches gekühlt wird.

20. Verfahren nach einem der Ansprüche 1 bis 19, dadurch gekennzeichnet, daß vor dem Aufbringen der Spannungszone (35, 36, 37) die Oberfläche des Hohlglases (3) im Bereich der beabsichtigten Spannungszone (35, 36, 37) vorerwärmt wird.

## Claims

1. Method of cutting hollow glass (3), wherein a laser beam (10) is used for irradiation about an envisaged separating line on an outer surface along a peripheral line of said hollow glass (3), **characterised in** that an incipient crack, which is very short relative to the periphery of said hollow glass (3), is set on a section of said separating line, that at least one stress zone (35, 36, 37) is established in the glass by heating with at least one laser beam (10, 33, 34) along the entire peripheral line of said hollow glass (3), with the circumferential velocity of said rotating hollow glass during the heating step amounting to at least one metre per second in the area of said separating line, and that after the steps of forming said incipient crack and of establishing said stress zone (35, 36, 37) along the entire peripheral line of said hollow glass (3) cooling is performed in the area of said stress zone (35, 36, 37).

2. Method according to Claim 1, **characterised in** that said incipient crack is formed prior to heating.

3. Method according to Claim 1, **characterised in** that said incipient crack is formed after heating.

4. Method according to any of the Claims 1 to 3, **characterised in** that the circumferential velocity amounts to roughly four metres per second.

5. Method according to any of the Claims 1 to 4, **characterised in** that a single laser beam (10) is used for application of said stress zone (35).

6. Method according to any of the Claims 1 to 4, **characterised in** that two laser beams (33, 34) are used for application of two stress zones (36, 37), which are incident each on the surface of said hollow glass (3) above and below the envisaged separating line.

7. Method according to any of the Claims 1 to 4, **characterised in** that four laser beams are used for application of two stress zones (36, 37), whereof respectively two are incident on the surface of said hollow glass (3) above and below the envisaged separating line.

8. Method according to any of the Claims 5 to 7, **characterised in** that said at least one laser beam (10, 33, 34) is directed onto said hollow glass (3) by means of at least one convergent lens.

9. Method according to Claim 8, **characterised in** that said convergent lens is a cylindrical lens, with the longitudinal axis of said cylindrical lens extending in parallel with the envisaged separating line.

10. Method according to any of the Claims 5 to 7, **characterised in** that said at least one laser beam (10, 33, 34) is converged onto said hollow glass (3) by means of at least one mirror focusing on a line, with this line extending in parallel with the envisaged separating line.

11. Method according to any of the Claims 1 to 10, **characterised in** that said incipient crack is formed in the area of the maximum stress in said stress zone (35, 36, 37).

12. Method according to any of the Claims 1 to 11, **characterised in** that said incipient crack is mechanically formed by means of a hard scribing tip (13).

13. Method according to Claim 12, **characterised in** that the position of said scribing tip (13) relative to said laser beam (10, 33, 34) is defined.

14. Method according to any of the Claims 1 to 11, **characterised in** that said incipient crack is formed with at least one laser beam (10, 33, 34) in a small area (44) presenting a high laser performance density.

15. Method according to Claim 14, **characterised in** that said high laser performance density is generated by focusing at least one laser beam (10, 33, 34).

16. Method according to Claim 14 or 15, **characterised in** that said high laser performance density is generated in a small area (44) by means of at least one high-energy pulse.

17. Method according to Claim 9 or Claim 10 and any of the Claims 15 or 16, **characterised in** that prior to the formation of said incipient crack a beam cut-off stop is introduced into said at least one laser beam (10, 33, 34).

18. Method according to any of the Claims 1 to 17, **characterised in** that cooling is performed by blowing cold air onto the surface.

19. Method according to any of the Claims 1 to 17, **characterised in** that cooling is performed by blowing an air/water mixture onto the surface.

20. Method according to any of the Claims 1 to 19, **characterised in** that prior to the establishment of said stress zone (35,36, 37) the surface of said hollow glass (3) is pre-heated in the area of the envisaged stress zone (35, 36, 37).

## Revendications

1. Procédé pour découper des verres creux (3), dans lequel on irradie avec un rayon laser (10) une surface extérieure autour d'une ligne de coupe prévue, le long d'une ligne de pourtour du verre creux (3),
caractérisé en ce qu'
- on met en place sur une section sur la ligne de séparation une très courte rupture de démarrage par rapport au pourtour du verre creux (3), que l'on introduit par un échauffement avec au moins un rayon laser (10), 33, 34) le long de toute la ligne de pourtour du verre creux (3) au moins une zone de contrainte (35, 36, 37) dans le verre, la vitesse périphérique du verre creux (3) en rotation lors de la séquence du chauffage dans la zone de la ligne de séparation atteignant au moins un mètre par seconde, et
- on procède à un refroidissement dans la région de la zone de contrainte (35, 36, 37) après la séquence de la mise en place de la rupture de démarrage et de l'établissement de la zone de contrainte (35, 36, 37) le long de la ligne de pourtour tout entière du verre creux (3).

2. Procédé selon la revendication 1,
caractérisé en ce que
la rupture de démarrage est mise en place avant l'échauffement.

3. Procédé selon la revendication 1,
caractérisé en ce que
la rupture de démarrage est mise en place après l'échauffement.

4. Procédé selon les revendications 1 à 3,
caractérisé en ce que
la vitesse périphérique atteint à peu près quatre mètres par seconde.

5. Procédé selon les revendications 1 à 4,
caractérisé en ce qu'
on utilise un seul rayon laser (10) pour établir la zone de contrainte (3) .

6. Procédé selon l'une des revendications 1 à 4,
caractérisé en ce qu'
on utilise deux rayons laser (33, 34) pour établir les deux zones de contrainte (36, 37), deux rayons laser qui tombent respectivement au dessus et au dessous de la ligne de séparation prévue sur la surface du verre creux (3).

7. Procédé selon l'une des revendications 1 à 4,
caractérisé en ce qu'
on utilise pour établir les deux zones de contrainte (36, 37), quatre rayons laser, dont respectivement deux tombent à une certaine hauteur au dessus et au dessous de la ligne de séparation prévue, sur la surface du verre creux (3).

8. Procédé selon l'une des revendications 5 à 7,
caractérisé en ce que
l'un au moins des rayons laser (10, 33, 34) est dirigé par au moins une lentille de convergence sur le verre creux (3).

9. Procédé selon la revendication 8,
caractérisé en ce que
la lentille de convergence est une lentille cylindrique, l'axe longitudinal de la lentille cylindrique étant orienté parallèlement à la ligne de séparation prévue.

10. Procédé selon l'une des revendications 5 à 7,
caractérisé en ce que
l'un au moins des rayons laser (10, 33, 34) est orienté avec au moins un miroir de focalisation sur une ligne de façon convergente sur le verre creux (3), la ligne s'étendant parallèlement à la ligne de séparation.

11. Procédé selon l'une des revendications 1 à 10,
caractérisé en ce que
la rupture de démarrage est mise en place dans la région des contraintes les plus élevées dans la zone de contrainte (35, 36, 37).

12. Procédé selon l'une des revendications 1 à 11,
caractérisé en ce que
la rupture de démarrage est mise en place mécaniquement au moyen d'une pointe dure à briser (13).

13. Procédé selon la revendication 12,
caractérisé en ce que
la position relative de la pointe à briser (13) est déterminée par rapport au rayon laser (10, 33, 34).

14. Procédé selon l'une des revendications 1 à 11,
caractérisé en ce que
la rupture de démarrage est mise en place avec au moins un rayon laser (10, 33, 34) dans une petite région (44) avec une densité de puissance élevée du laser.

15. Procédé selon la revendication 14,
caractérisé en ce que
la densité de puissance élevée du laser est produite par focalisation d'au moins un rayon laser (10, 33, 34).

16. Procédé selon la revendication 14 ou 15,
caractérisé en ce que
la densité de puissance élevée du laser est produite dans la petite région (44) par au moins une impulsion d'énergie élevée.

17. Procédé selon la revendication 9 ou la revendication 10, et selon l'une des revendications 15 ou 16
caractérisé en ce qu'
on introduit avant la mise en place de la rupture de démarrage un diaphragme d'obscurcissement du rayon dans l'un au moins des rayons laser (10, 33, 34).

18. Procédé selon l'une des revendications 1 à 17,
caractérisé en ce qu'
on procède à un refroidissement par soufflage d'air froid.

19. Procédé selon l'une des revendications 1 à 17,
caractérisé en ce qu'
on procède à un refroidissement par soufflage d'un mélange d'air et d'eau.

20. Procédé selon l'une des revendications 1 à 19,
caractérisé en ce qu'
on chauffe au préalable la surface du verre creux (3) dans la région de la zone de contrainte prévue (35, 36, 37) avant la mise en place de la zone de contrainte (35, 36, 3 7).
